# EUROPÄISCHE PATENTSCHRIFT

(11) **EP 1 731 746 B1**
(45) Veröffentlichungstag und Bekanntmachung des Hinweises auf die Patenterteilung: **27.02.2008**
(21) Anmeldenummer: 06011354.5
(22) Anmeldetag: 01.06.2006
(51) Int. Cl.: F02D 41/22, F02D 41/06, F02D 41/00

(54) **Verfahren und Vorrichtung zur Überwachung der Funktionstüchtigkeit einer Ventilhub-Verstelleinrichtung einer Brennkraftmaschine in einer Kaltstartphase**
Method and apparatus for monitoring the function of a variable valve lift apparatus for an internal combustion engine during cold start
Procédé et dispositif pour vérifier le fonctionnement du dispositif de commande d'une soupape à levée variable d'un moteur à combustion interne pendant le démarrage à froid

(30) Priorität: 07.06.2005 DE 102005026054
(43) Veröffentlichungstag der Anmeldung: 13.12.2006
(73) Patentinhaber: Dr.Ing. h.c. F. Porsche Aktiengesellschaft, 70435 Stuttgart (DE)
(72) Erfinder: Melzig, Thomas, 71229 Leonberg-Höfingen (DE); Nagel, Nils, 71229 Leonberg (DE)

(56) Entgegenhaltungen:
- EP-A- 1 020 623
- EP-A- 1 460 254
- EP-A- 1 467 068
- DE-A1- 19 857 183
- DE-A1- 19 954 535

## Beschreibung

Die vorliegende Erfindung betrifft ein Verfahren und eine Vorrichtung zur Überwachung der Funktionstüchtigkeit einer Ventilhub-Verstelleinrichtung einer Brennkraftmaschine in einer Kaltstartphase.

Moderne Brennkraftmaschinen sind serienmäßig mit Nockenwellen-Verstellsystemen zur Verbesserung von Leistung und Drehmoment ausgerüstet. Alle diese Systeme arbeiten nach dem Prinzip der Verdrehung der Phasenlage der Nockenwelle relativ zur Kurbelwelle mittels hydraulischer oder hydromechanischer Verstellelemente.

Ständig steigende Anforderungen an Abgasqualität, Verbrauch, Leistung und Drehmoment sind mit diesen Systemen jedoch kaum mehr zu erfüllen. So gibt es heute auf dem Markt bereits Weiterentwicklungen, wie z.B. ein mehrstufiges oder stufenloses Ventilhub-Verstellsystem.

Eine Ventilhub-Verstelleinrichtung ist beispielsweise in der DE 100 16 103 A1 beschrieben. Durch das Einstellen des Hubes des Ventils steht das Ventil dem Gasstrom des Luft-/ Kraftstoffgemisches mehr oder weniger hemmend entgegen, wodurch das Befüllen der Brennräume mit und das Entleeren der Brennräume vom Verbrennungsgas maßgeblich beeinflusst wird.

Neben der reinen Verstellfunktion stehen Bedingungen, wie z.B. einfacher, robuster Aufbau, geringe Reibungsverluste, zuverlässige Funktion über die gesamte Lebensdauer, Applizierbarkeit auf bestehende Zylinderkopfkonstruktionen, usw. im Vordergrund. Der Einsatz soll sowohl bei Otto- als auch bei Dieselmotoren auf der Ein- und/oder Auslassseite möglich sein.

Bei der Reduzierung des Kraftstoffverbrauchs und der Abgasemission einer Brennkraftmaschine kommt der korrekten Funktion einer Ventilhub-Verstelleinrichtung eine wichtige Bedeutung zu. Daher wird vom Gesetzgeber auch eine Überwachung der Funktionstüchtigkeit eines derartigen Systems gefordert, falls eine Brennkraftmaschine mit einem Ventilhub-Verstellsystem ausgestattet ist.

Beispielsweise gibt es ein Ventilhub-Verstellsystem, das direkt nach dem Anlassen des Motors in einer vorgegebenen Kaltstartphase von einem kleinem Ventilhub auf einen großen Ventilhub umschaltet. Bekannte Überwachungssysteme haben in diesem Betriebszustand der Kaltstartphase Überwachungsprobleme bzw. sind konstruktiv sehr aufwändig.

Aus der EP 1 467 068 A1 ist ein Verfahren bekannt, bei dem die Ventilhub-Verstellung anhand der Abgaszusammensetzung mittels einer λ-Sonde ausgewertet wird. Als nachteilig bei diesem bekannten System hat sich die Tatsache erwiesen, dass die λ -Sonden in der Kaltstartphase nicht betriebsbereit sind.

Eine weitere Möglichkeit zur Überwachung der Funktionstüchtigkeit besteht in der Ermittlung der Laufunruhe einzelner Zylinder und im Vergleich der ermittelten Laufunruhe mit vorgegebenen Schwellwerten. In der Kaltstartphase ist jedoch keine nennenswerte Laufunruhe vorhanden.

Noch eine weitere Möglichkeit zur Überwachung der Funktionstüchtigkeit bestünde in einer Auswertung des Signals des Luftmassenmessers. Hierbei hat sich die Tatsache als nachteilig erwiesen, dass die Signalgüte des Luftmassenmessers stark von weiteren Faktoren abhängig ist.

Eine Lösung mit hohem sensorischen Aufwand besteht darin, die Drucke vor den Einlassventilen zu messen. Verschiedenen Ventilhubkurven können verschiedene Druckniveaus zugeordnet werden. Diese Druckniveaus werden mit in Kennfeldern abgespeicherten Werten verglichen.

Die JP 61 294 03 offenbart eine Ventilhub-Überwachungsvorrichtung mit einem Solenoidventil zum Öffnen und Schließen einer Luftzufuhrleitung in einem Betriebsabschnitt. Das Solenoidventil wird für eine bestimmte Zeitspanne mittels eines Diagnosestartsignals geschlossen, und ein Abnormalitätssignal wird beim Ventilöffnen ausgegeben, wenn ein Ventilöffnungswert unterhalb eines vorgegebenen Sollwerts liegt. Dabei wird der Öffnungsgrad des Ventils durch einen Ventilhubdetektor erfasst. Auch die Anwendung dieser bekannten Lösung auf die Überwachung der Funktionstüchtigkeit einer Ventilhub-Verstelleinrichtung gestaltet sich aufwändig.

Eine Aufgabe der vorliegenden Erfindung liegt daher darin, ein verbessertes Verfahren und eine relativ unaufwändige Vorrichtung zur Überwachung der Funktionstüchtigkeit einer Ventilhub-Verstelleinrichtung einer Brennkraftmaschine in einer Kaltstartphase zu schaffen, welche möglichst zuverlässig arbeiten.

Das erfindungsgemäße Verfahren zur Überwachung der Funktionstüchtigkeit einer Ventilhub-Verstelleinrichtung einer Brennkraftmaschine in einer Kaltstartphase gemäß Anspruch 1 bzw. die entsprechende Vorrichtung nach Anspruch 8 weisen den Vorteil auf, dass die Überwachung unaufwändig und genau durchgeführt werden kann.

Die der vorliegenden Erfindung zugrunde liegende Idee besteht darin, die Überwachung der Funktionstüchtigkeit einer Ventilhub-Verstelleinrichtung einer Brennkraftmaschine während der Kaltstartphase auf den Integralanteil der Drosselklappenregelung zu basieren. Diese Art der Überwachung hat den Vorteil, dass kein sensorischer Zusatzaufwand notwendig ist und die Überwachung schon einige wenige Sekunden nach dem Anlassen des Motors durchführbar ist.

In den Unteransprüchen finden sich vorteilhafte Weiterbildungen und Verbesserungen des jeweiligen Gegenstandes der Erfindung.

Gemäß einer bevorzugten Weiterbildung erfolgt ein Schritt des Erfassens, welche Zeitspanne seit dem Beginn der Kaltstartphase verstrichen ist und ob die erfasste Zeitspanne mindestens eine vorbestimmte Zeitspanne beträgt, wobei das Erfassen des Integralanteils in der Kaltstartphase erst durchgeführt wird, wenn die erfasste Zeitspanne mindestens die vorbestimmte Zeitspanne beträgt. Dies hat den Vorteil der Vermeidung von Fehlerkennungen am Anfang der Kaltstartphase.

Gemäß einer weiteren bevorzugten Weiterbildung wird der mit dem erfassten Integralanteil zu vergleichende Schwellwert entsprechend der erfassten Zeitspanne aus einer Mehrzahl vorbestimmter Schwellwerte ausgewählt. Somit lässt sich eine Zeitabhängigkeit der Integralanteile berücksichtigen.

Gemäß einer weiteren bevorzugten Weiterbildung weist die Brennkraftmaschine zwei Zylinderbänke mit durch die Ventilhub-Verstelleinrichtung separater Ventilhubverstellung aufweist, wobei die Schritte des Vergleichens und des Beurteilens folgendermaßen erfolgen: erstes Vergleichen des in der Kaltstartphase erfassten Integralanteils mit einem vorbestimmten ersten Schwellwert; erstes Beurteilen der Funktionstüchtigkeit der Ventilhub-Verstelleinrichtung beider Zylinderbänke basierend auf dem Ergebnis des ersten Vergleichens; zweites Vergleichen des in der Kaltstartphase erfassten Integralanteils mit einem vorbestimmten zweiten Schwellwert, falls das erste Beurteilen anzeigt, dass die Funktionstüchtigkeit der Ventilhub-Verstelleinrichtung mindestens einer der beiden Zylinderbänke fehlerhaft ist; und zweites Beurteilen der Funktionstüchtigkeit der Ventilhub-Verstelleinrichtung der beiden Zylinderbänke basierend auf dem zweiten Ergebnis des zweiten Vergleichens. Dadurch ist eine stufenweise Diagnose möglich.

Gemäß einer weiteren bevorzugten Weiterbildung werden der oder die Schwellwerte in einer Speichereinrichtung gespeichert.

Gemäß einer weiteren bevorzugten Weiterbildung werden der oder die Schwellwerte basierend auf einer Drosselklappen-Sollwertadaption vor dem Vergleichen adaptiert. Dadurch können Alterungsprozesse bzw. Fertigungstoleranzen berücksichtigt werden.

Gemäß einer weiteren bevorzugten Weiterbildung wird eine beurteilte Fehlerhaftigkeit der Funktionstüchtigkeit der Ventilhub-Verstelleinrichtung mittels einer Anzeigeeinrichtung angezeigt. Hierdurch kann der Fahrer über eine Fehlfunktion informiert werden.

Ausführungsbeispiele der Erfindung sind in den Zeichnungen dargestellt und in der nachfolgenden Beschreibung näher erläutert.

Es zeigen:
- Fig. 1: ein Blockdiagramm einer ersten Ausführungsform der erfindungsgemäßen Vorrichtung zur Überwachung der Funktionstüchtigkeit einer Ventilhub-Verstelleinrichtung einer Brennkraftmaschine;
- Fig. 2: ein Flussdiagramm einer entsprechenden ersten Ausführungsform des erfindungsgemäßen Verfahrens zur Überwachung der Funktionstüchtigkeit einer Ventilhub-Verstelleinrichtung einer Brennkraftmaschine;
- Fig. 3: ein Diagramm zum Erläutern des Zeitverlaufs des Integralwerts I(t) einer Drosselklappen-Regeleinrichtung in der Kaltstartphase, wobei die Kurven A, B, C verschiedene Funktionstüchtigkeiten der Ventilhub-Verstelleinrichtung und die Kurven S1(t), S2(t) entsprechend gewählte Schwellwertkurven darstellen;

- Fig. 4: ein Blockdiagramm einer zweiten Ausführungsform der erfindungsgemäßen Vorrichtung zur Überwachung der Funktionstüchtigkeit einer Ventilhub-Verstelleinrichtung einer Brennkraftmaschine; und
- Fig. 5: ein Flussdiagramm einer entsprechenden ersten Ausführungsform des erfindungsgemäßen Verfahrens zur Überwachung der Funktionstüchtigkeit einer Ventilhub-Verstelleinrichtung einer Brennkraftmaschine.

In den Figuren bezeichnen dieselben Bezugszeichen gleiche oder funktionsgleiche Elemente.

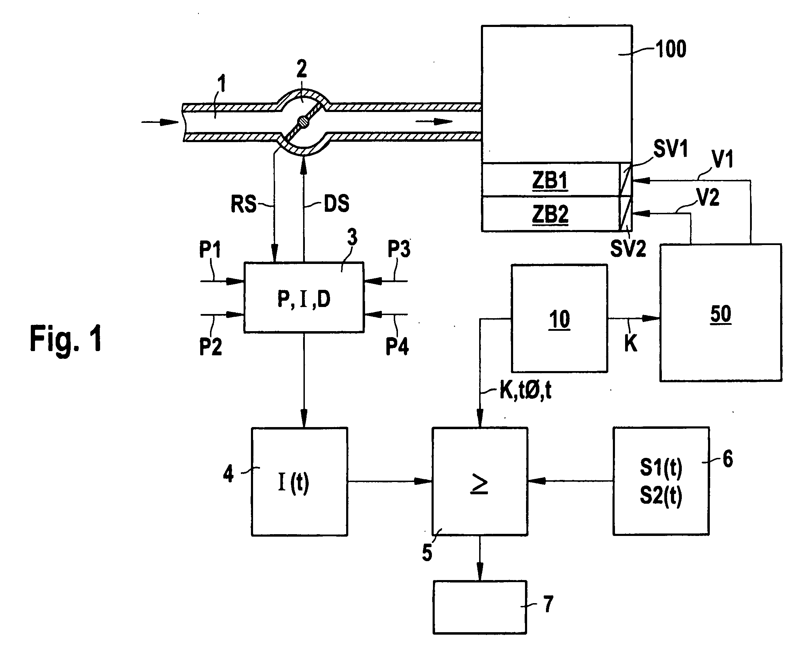

Fig. 1 zeigt ein Blockdiagramm einer ersten Ausführungsform der erfindungsgemäßen Vorrichtung zur Überwachung der Funktionstüchtigkeit einer Ventilhub-Verstelleinrichtung einer Brennkraftmaschine.

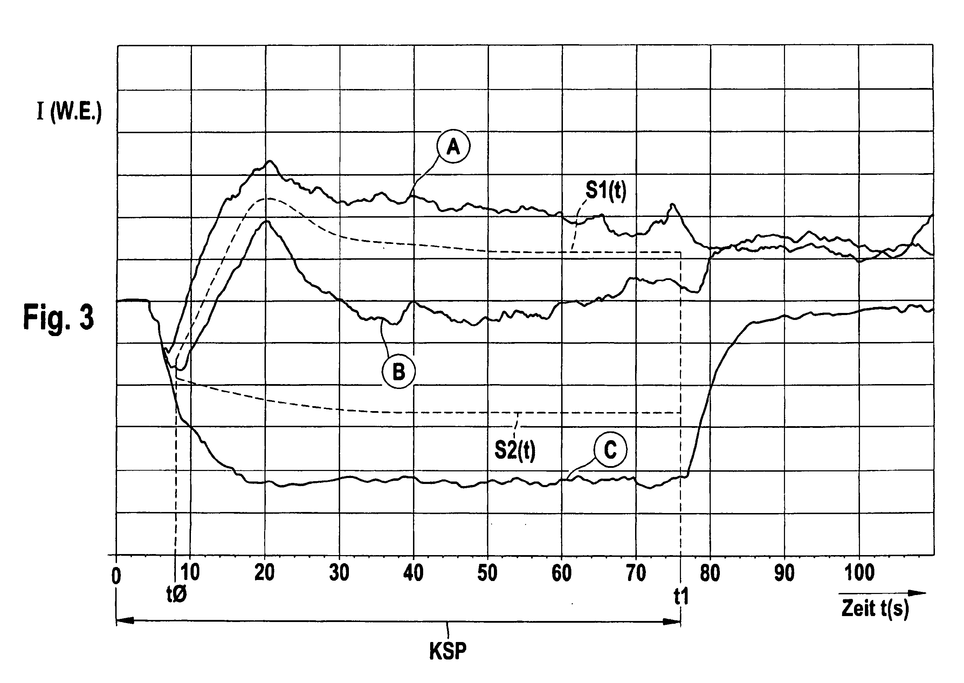

In Fig. 1 bezeichnet das Bezugszeichen 1 eine Ansaugleitung einer Brennkraftmaschine 100 mit zwei Zylinderbänken ZB1, ZB2. Eine Ventilhub-Verstelleinrichtung 10, 50, SV1, SV2 umfasst eine Steuereinrichtung 10 zum Erzeugen eines Signals K zum Anzeigen einer Kaltstartphase, eines Signals zum Anzeigen des Ablaufs einer vorbestimmten Zeitspanne t0 (vgl. Fig. 3) sowie eines Signals zum Anzeigen der Zeit seit Beginn der Kaltstartphase, eine Treibereinrichtung 50 zum Erzeugen von Signale V1, V2 zum Verstellen des Ventilhubs der Einlassventile der Zylinderbänke ZB1, ZB2 von "klein" auf "groß" in der Kaltstartphase des Motors über ein jeweiliges Schaltventil SV1, SV2. Neben der Ventilhubverstellung ist während der Kaltstartphase beispielsweise auch eine nicht gezeigte Katalysatorheizung in Betrieb.

In der Ansaugleitung 1 befindet sich eine elektronisch regelbare Drosselklappe 2, welche mit einer Regeleinrichtung 3 verbunden ist, die den Drosselklappenöffnungswinkel mit einer P,I,D-Regelungsprozedur regelt und dazu einen entsprechenden Stellwert DS an die Drosselklappe 2 ausgibt und einen entsprechenden Rückführwert RS von der Drosselklappe 2 empfängt, aus dem in der Regeleinrichtung 3 der Istwert gebildet wird. Schematisch angedeutet und mit P1-P4 bezeichnet sind an die Regeleinrichtung 3 zurückgeführte Regelparameter, wie z.B. Betätigungsgrad des Gaspedals, Motortemperatur, Drehzahl, Motorlast etc., aus denen in der Regeleinrichtung 3 der Sollwert gebildet wird.

Bezugszeichen 4 bezeichnet eine Erfassungseinrichtung für den aktuellen Integralanteil I(t), d.h. den Koeffizienten des Integralwerts der Differenz zwischen Soll- und Istwert (Regelabweichung) der P,I,D-Regelungsprozedur der Regeleinrichtung 3. Mit Bezugszeichen 5 bezeichnet ist eine Vergleichseinrichtung, welche den aktuellen, von der Erfassungseinrichtung 4 erfassten Integralanteil I(t) mit entsprechenden, in einer Speichereinrichtung 6 gespeicherten Schwellwerten S1(t), S2(t) vergleicht. Zur korrekten Zuordnung des aktuellen Integralanteils I(t) zu einem entsprechenden, in der Speichereinrichtung 6 gespeicherten Schwellwert S1(t) bzw. S2(t) empfängt die Vergleichseinrichtung 5 ein Signal von der Steuereinrichtung 10, welches angibt, dass die Kaltstartphase läuft und welche Zeit seit Beginn der Kaltstartphase verstrichen ist.

Ein Überschreiten des ersten Schwellwerts S1(t) durch den aktuellen Integralanteil I(t) zeigt an, dass die Funktion der Ventilhub-Verstelleinrichtung 10, 50, SV1, SV2 korrekt ist (positives Vergleichsergebnis). Ein Unterschreiten des ersten Schwellwerts S1(t) und gleichzeitiges Überschreiten des zweiten Schwellwerts S2(t) zeigt an, dass eine der beiden Zylinderbänke ZB1, ZB2 der Brennkraftmaschine 100 eine Fehlfunktion der Ventilhub-Verstelleinrichtung 10, 50, SV1, SV2 aufweist, z.B. einen Ausfall des betreffenden Schaltventils SV1 bzw. SV2 (semi-negatives Vergleichsergebnis). Ein Unterschreiten des zweiten Schwellwerts S2(t) schließlich zeigt eine Fehlfunktion der Ventilhub-Verstelleinrichtung 10, 50, SV1, SV2 für beide Zylinderbänke ZB1, ZB2 an (negatives Vergleichsergebnis).

Im Falle eines semi-negativen oder negativen Vergleichsresultats wird von der Vergleichseinrichtung 5 eine Anzeigeeinrichtung 7 angesteuert, welche einen Warnhinweis auf eine Fehlfunktion der Ventilhub-Verstelleinrichtung 10, 50, SV1, SV2 ausgibt und ggfs. weitere Maßnahmen im Motormanagement ergreift.

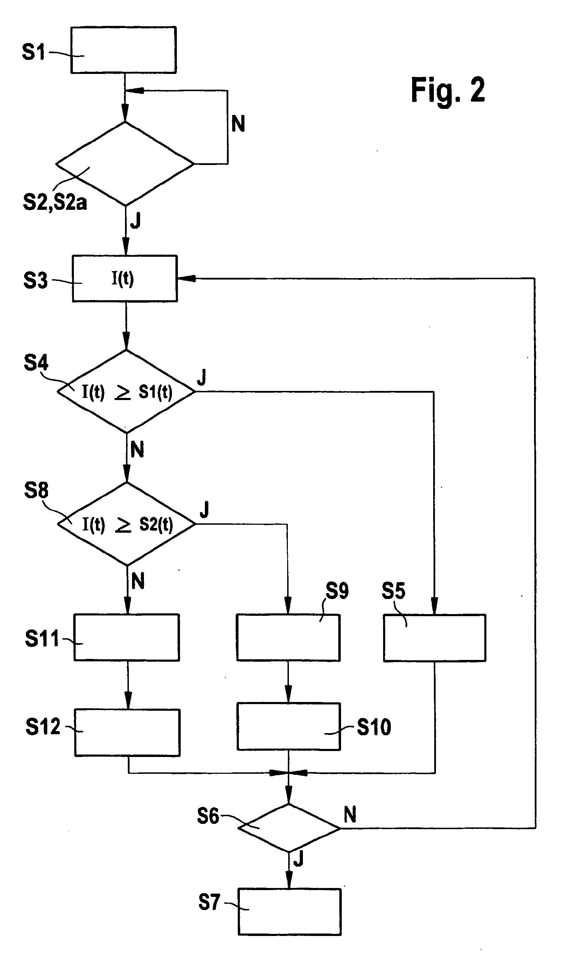

Fig. 2 zeigt ein Flussdiagramm einer entsprechenden ersten Ausführungsform des erfindungsgemäßen Verfahrens zur Überwachung der Funktionstüchtigkeit einer Ventilhub-Verstelleinrichtung einer Brennkraftmaschine.

In Fig. 2 bezeichnet Schritt S1 den Start der ersten Ausführungsform des Verfahrens zur Überwachung der Funktionstüchtigkeit der Ventilhub-Verstelleinrichtung 10, 50, SV1, SV2 der Brennkraftmaschine 100. In Schritt S2 wird überprüft, ob sich die Brennkraftmaschine 100 in einer Kaltstartphase KSP befindet und in Schritt S2a, welche Zeitspanne t die Kaltstartphase KSP bereits andauert und ob diese Zeitspanne t bereits mindestens eine Zeitspanne t0 von einigen Sekunden, im vorliegenden Beispiel 8 Sekunden, beträgt, damit eine Überwachung der Funktionstüchtigkeit mit dem hier beschriebenen Verfahren möglich ist (vgl. Fig. 3).

Befindet sich die Brennkraftmaschine 100 nicht in der Kaltstartphase KSP oder ist die vorbestimmte Zeitspanne t0 noch nicht verstrichen, so springt das Verfahren zurück und wiederholt diesen Schritt S2 so lange, bis die gewünschte Bedingung vorliegt.

Befindet sich die Brennkraftmaschine 100 in der Kaltstartphase KSP und ist die vorbestimmte Zeitspanne t0 verstrichen, lädt die Vergleichseinrichtung 5 in Schritt S3 einen aktuellen von der Erfassungseinrichtung 4 erfassten Integralanteil I(t) sowie eine aktuelle Zeit t von der Steuereinrichtung 10 und vergleicht den aktuellen Integralanteil I(t) in Schritt S4 mit einem entsprechenden ersten Schwellwert S1(t), den sie von der Speichereinrichtung 6 lädt.

Ergibt der Vergleich in Schritt S4, dass der aktuelle Integralanteil I(t) größer als oder gleich groß wie der erste Schwellwert S1(t) ist, so fährt das Verfahren fort mit Schritt S5, in dem festgestellt wird, dass die Funktion der Ventilhub-Verstelleinrichtung 10, 50, SV1, SV2 in Ordnung ist. In Schritt S6 wird anschliessend überprüft, ob die Kaltstartphase KSP beendet ist. Falls ja, endet das Verfahren im Schritt S7.

Falls die Kaltstartphase bei Schritt S6 nicht beendet ist, springt das Verfahren zurück zum Schritt S3 zur Erfassung eines erneuten Integralanteils I(t) usw.

Ist das Vergleichsergebnis in Schritt S4 negativ, d.h. ist der aktuelle Integralanteil I(t) kleiner als der entsprechende erste Schwellwert S1(t), fährt das Programm fort mit Schritt S8, in dem die Vergleichseinrichtung 5 einen Vergleich des aktuellen Integralanteils I(t) mit dem entsprechenden zweiten Schwellwert S2(t) aus der Speichereinrichtung durchführt.

Zeigt der Vergleich in Schritt S8, dass der aktuelle Integralanteil I(t) größer als oder gleich groß wie der entsprechende zweite Schwellwert S2(t) ist, verzweigt das Programm zu Schritt S9, in dem festgestellt wird, dass eine der beiden Zylinderbänke ZB1, ZB2 eine Fehlfunktion der Ventilhub-Verstelleinrichtung 10, 50, SV1, SV2 aufweist. In Schritt S10 wird diese Fehlfunktion auf der Anzeigeeinrichtung 7 angezeigt. Dann fährt das Programm fort mit Schritt S6 usw., wie bereits oben beschrieben.

Ergibt der Vergleich in Schritt S8, dass der aktuelle erfasste Integralanteil I(t) auch kleiner als der zweite entsprechende Schwellwert S2(t) ist, so wird in Schritt S11 festgestellt, dass beide Zylinderbänke ZB1, ZB2 der Brennkraftmaschine 100 eine Fehlfunktion der Ventilhub-Verstelleinrichtung 10, 50, SV1, SV2 aufweisen. In diesem Fall wird eine entsprechende Anzeige auf der Anzeigeeinrichtung 7 im Schritt S12 veranlasst, wonach das Programm mit Schritt S6 usw. fortfährt, wie oben bereits beschrieben.

Fig. 3 zeigt ein Diagramm zum Erläutern des Zeitverlaufs des Integralwerts I(t) einer Drosselklappen-Regeleinrichtung in der Kaltstartphase, wobei die Kurven A, B, C verschiedene Funktionstüchtigkeiten der Ventilhub-Verstelleinrichtung und die Kurven S1(t), S2(t) entsprechend gewählte Schwellwertkurven darstellen.

In Fig. 3 ist auf der Abszisse die Zeit t in Sekunden dargestellt. Die Kaltstartphase beginnt bei t = 0 und dauert bis zum Zeitpunkt t1 = 78 s. Während der Kaltstartphase KSP ist das logische Signal K der Steuereinrichtung 10 gesetzt, welches die Treibereinrichtung 50 ansteuert, den Ventilhub in den beiden Zylinderbänken ZB1, ZB2 auf "groß" zu stellen. Auf der Ordinate dargestellt in Fig. 3 ist der Verlauf des Integralanteils I(t) während der Kaltstartphase KSP in willkürlichen Einheiten.

Dabei bezeichnet die Kurve A den Fall, dass beide Zylinderbänke ZB1, ZB2 eine funktionstüchtige Ventilhub-Verstelleinrichtung 10, 50, SV1, SV2 aufweisen, d.h. beide sollgemäß auf Ventilhub "groß" gestellt sind. Die Kurve B zeigt den Fall, dass eine der beiden Zylinderbänke ZB1, ZB2 eine Fehlfunktion der Ventilhub-Verstelleinrichtung 10, 50, SV1, SV2 aufweist, d.h. der Ventilhub bei einer der Zylinderbänke ZB1, ZB2 "klein" verblieben ist. Die Kurve C schließlich zeigt den Fall, in dem beide Zylinderbänke ZB1, ZB2 eine Fehlfunktion hinsichtlich der Ventilhub-Verstelleinrichtung 10, 50, SV1, SV2 aufweisen, d.h. beide Zylinderbänke ZB1, ZB2 im Ventilhub "klein" verblieben sind.

Deutlich erkennbar an der Darstellung gemäß Fig. 3 ist die Tatsache, dass der Integralanteil I(t) der Regeleinrichtung 3 für die Drosselklappe 2 eine Fehlfunktion der Ventilhubverstellung markant wiedergibt. Durch eine geeignete Auswertung kann also eine Fehlfunktionserkennung durchgeführt werden. Zu diesem Zweck sind die Schwellwerte S1(t) und S2(t) zeitabhängig zwischen die Kurven A, B bzw. B, C gelegt. Wie bereits im Zusammenhang mit Fig. 1 und 2 ausführlich erläutert, lautet das Kriterium für eine vollfunktionstüchtige Ventilhubverstellung I(t) ≥ S1(t), für eine teilfunktionsfähige Ventilhubverstellung S1(t) > I(t)≥S2(t) und für eine vollständige Fehlfunktion der Ventilhubverstellung 1(t) < S2(t).

Wie sich weiterhin aus Fig. 3 ergibt, ist die Anwendung der Fehlfunktionserkennung erst nach der Zeitspanne t0, welche hier 8 Sekunden beträgt, nach dem Beginn der Kaltstartphase KSP möglich. Dies beruht auf der für die Regeleinrichtung 3 benötigten Einschwingphase bzw. der Trägheit der Komponenten der Brennkraftmaschine 100.

Die physikalische Ursache für das Auseinanderfallen der Kurven A, B, C ist einerseits im für die Ventilhubverstellungen "klein" bzw. "groß" verschiedenen Schleppmoment und andererseits im unterschiedlichen Strömungswiderstand zu finden.

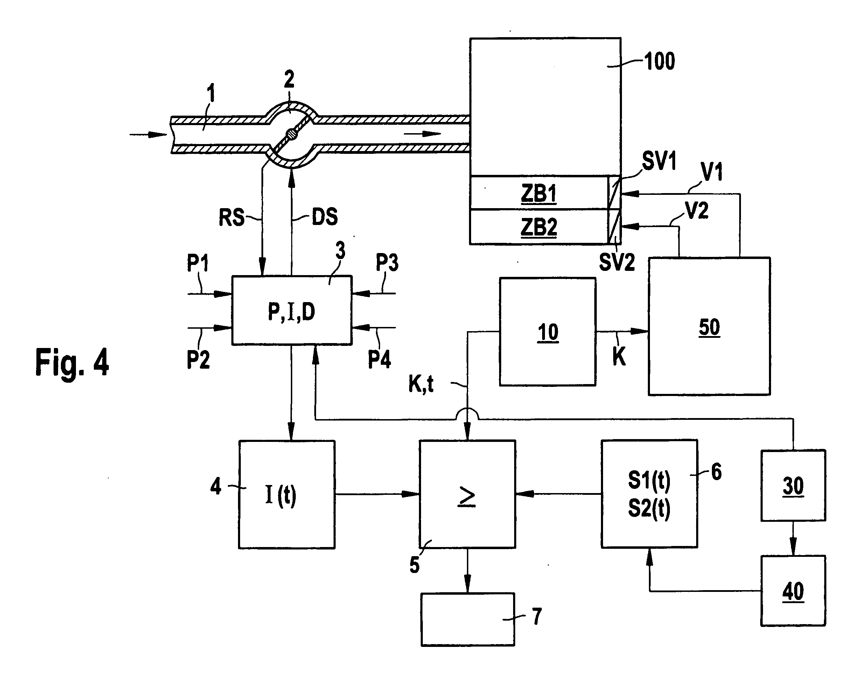

Fig. 4 zeigt ein Blockdiagramm einer zweiten Ausführungsform der erfindungsgemäßen Vorrichtung zur Überwachung der Funktionstüchtigkeit einer Ventilhub-Verstelleinrichtung einer Brennkraftmaschine.

Bei der Ausführungsform gemäß Fig. 4 ist zusätzlich zum Aufbau gemäß Fig. 1 eine Drosselklappen-Adaptionseinrichtung 30 zum Bereitstellen von Drosselklappen-Sollwertadaptionswerten vorgesehen. Diese Drosselklappen-Sollwertadaptionswerte ändern die von der Regeleinrichtung 3 einzuregelnde Drosselklappenöffnung. Eine derartige Adaption der Drosselklappen-Sollwerte bedingt eine Veränderung des Kurvenverlaufs der Kurven A, B, C gemäß Fig. 3, wobei jedoch die Sensitivität hinsichtlich einer Fehlfunktion, d.h. das Auseinanderfallen für die Fälle A, B, C in der Kaltstartphase KSP, erhalten bleibt. Die Adaption berücksichtigt insbesondere Fertigungstoleranzen bzw. Alterungsprozesse der Brennkraftmaschine 100.

Aufgrund der Veränderung der Kurven A, B, C infolge der Adaption müssen auch die Schwellwerte S1(t) und S2(t) entsprechend angepasst werden. Dazu dient bei dieser Ausführungsform eine Schwellwert-Adaptionseinrichtung 40, welche mit der Drosselklappen-Sollwertadaptionseinrichtung 30 verbunden ist. Im einfachsten Fall werden dazu Schwellwert-Adaptionswerte zu den Schwellwerten addiert bzw. davon abgezogen.

Ansonsten sind Aufbau und Funktion der in Fig. 4 gezeigten zweiten Ausführungsform identisch zu denjenigen der ersten Ausführungsform in Fig. 1.

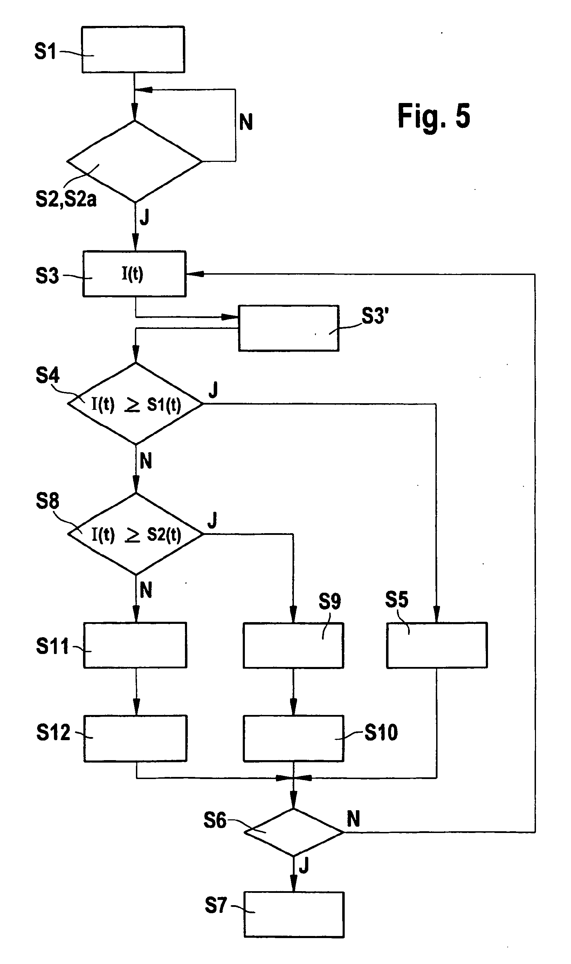

Fig. 5 zeigt ein Flussdiagramm einer entsprechenden ersten Ausführungsform des erfindungsgemäßen Verfahrens zur Überwachung der Funktionstüchtigkeit einer Ventilhub-Verstelleinrichtung einer Brennkraftmaschine.

Zusätzlich zu den Verfahrensschritten, welche vorstehend bereits im Zusammenhang mit Fig. 2 erläutert worden sind, tritt ein Schritt S3' zwischen Schritt S3 und S4 hinzu, welcher vor dem Vergleichen gemäß Schritt S4 bzw. S8 dafür sorgt, dass die Schwellwerte S1(t) bzw. S2(t) entsprechend dem Adaptionsstatus der Drosselklappen-Sollwertdaptionseinrichtung 30 angepasst werden. Ansonsten ist der Verfahrensablauf identisch zu dem bereits im Zusammenhang mit Fig. 2 erläuterten Verfahrensablauf.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Obwohl bei den vorstehend erläuterten Ausführungsformen die Schwellwerte S1 bzw. S2 als zeitabhängig angenommen wurden, könnten diese in einem vereinfachten Überwachungssystem auch als konstant angenommen werden. Dadurch würde sich im betrachteten System gemäß Fig. 3 lediglich die Totzeit von ca. 8 s auf ca. 20 s verändern.

Auch muss die Regelungsprozedur keine P,I,D-Prozedur sein, sondern kann auch eine andere Regelungsprozedur mit einem I-Anteil sein.

## Patentansprüche

1. Verfahren zur Überwachung der Funktionstüchtigkeit einer Venfilhub-Verstelleinrichtung (10, 50, SV1, SV2) einer Brennkraftmaschine (100) in einer Kaltstartphase (KSP), wobei die Brennkraftmaschine (100) eine mittels einer Regeleinrichtung (3) elektronisch regelbare Drosselklappe (2) aufweist und wobei die Regeleinrichtung (3) einen Integralanteil (I(t)) zum Regeln der Drosselklappe (2) verwendet, mit den Schritten:
Erfassen (S2) des Vorliegens einer Kaltstartphase (KSP);
Erfassen (S3) des Integralanteils (I(t)) in der Kaltstartphase (KSP);
Vergleichen (S4, S8) des in der Kaltstartphase (KSP) erfassten Integralanteils (I(t)) mit mindestens einem vorbestimmten Schwellwert (S1(t); S2(t)); und
Beurteilen (S5, S9, S11) der Funktionstüchtigkeit der Ventilhub-Verstelleinrichtung (10, 50, SV1, SV2) basierend auf dem Ergebnis des Vergleichens (S4, S8).

2. Verfahren nach Anspruch 1, **gekennzeichnet durch** einen Schritt (S2a) des Erfassens, welche Zeitspanne (t) seit dem Beginn der Kaltstartphase (KSP) verstrichen ist und ob die erfasste Zeitspanne (t) mindestens eine vorbestimmte Zeitspanne (t0) beträgt, wobei das Erfassen (S3) des Integralanteils (I(t)) in der Kaltstartphase (KSP) erst durchgeführt wird, wenn die erfasste Zeitspanne (t) mindestens die vorbestimmte Zeitspanne (t0) beträgt.

3. Verfahren nach Anspruch 1 oder 2, wobei der mit dem erfassten Integralanteil (I(t)) zu vergleichende Schwellwert (S1(t); S2(t)) entsprechend der erfassten Zeitspanne (t) aus einer Mehrzahl vorbestimmter Schwellwerte (S1(t); S2(t)) ausgewählt wird.

4. Verfahren nach einem der vorhergehenden Ansprüche, wobei die Brennkraftmaschine (100) zwei Zylinderbänke (ZB1, ZB2) mit durch die Ventilhub-Verstelleinrichtung (10, 50, SV1, SV2) separater Ventilhubverstellung aufweist, **dadurch gekennzeichnet, dass** die Schritte des Vergleichens (S4, S8) und des Beurteilens (S5, S9, S11) folgendermaßen erfolgen:
erstes Vergleichen (S4) des in der Kaltstartphase (KSP) erfassten Integralanteils (I(t)) mit einem vorbestimmten ersten Schwellwert (S1(t));
erstes Beurteilen (S5, S9) der Funktionstüchtigkeit der Ventilhub-Verstelleinrichtung (10, 50, SV1, SV2) beider Zylinderbänke (ZB1, ZB2) basierend auf dem Ergebnis des ersten Vergleichens (S4);
zweites Vergleichen (S8) des in der Kaltstartphase (KSP) erfassten Integralanteils (I(t)) mit einem vorbestimmten zweiten Schwellwert (S2(t)), falls das erste Beurteilen (S5, S9) anzeigt, dass die Funktionstüchtigkeit der Ventilhub-Verstelleinrichtung (10, 50, SV1, SV2) mindestens einer der beiden Zylinderbänke (ZB1, ZB2) fehlerhaft ist; und
zweites Beurteilen (S9, S11) der Funktionstüchtigkeit der Ventilhub-Verstelleinrichtung (10, 50, SV1, SV2) der beiden Zylinderbänke (ZB1, ZB2) basierend auf dem zweiten Ergebnis des zweiten Vergleichens (S8).

5. Verfahren nach einem der vorhergehenden Ansprüche, **dadurch gekennzeichnet, dass** der oder die Schwellwerte (S1(t); S2(t)) in einer Speichereinrichtung (6) gespeichert werden.

6. Verfahren nach einem der vorhergehenden Ansprüche, **dadurch gekennzeichnet, dass** der oder die Schwellwerte (S1(t); S2(t)) basierend auf einer Drosselklappen-Sollwertadaption vor dem Vergleichen (S4, S8) adaptiert werden.

7. Verfahren nach einem der vorhergehenden Ansprüche, **dadurch gekennzeichnet, dass** eine beurteilte Fehlerhaftigkeit der Funktionstüchtigkeit der Ventilhub-Verstelleinrichtung (10, 50, SV1, SV2) mittels einer Anzeigeeinrichtung (7) angezeigt wird.

8. Vorrichtung zur Überwachung der Funktionstüchtigkeit einer Ventilhub-Verstelleinrichtung (10, 50, SV1, SV2) einer Brennkraftmaschine (100) in einer Kaltstartphase (KSP), wobei die Brennkraftmaschine (100) eine mittels einer Regeleinrichtung (3) elektronisch regelbare Drosselklappe (2) aufweist und wobei die Regeleinrichtung (3) einen Integralanteil (I(t)) zum Regeln der Drosselklappe (2) verwendet, mit:
einer Erfassungseinrichtung (4) zum Erfassen des Integralanteils (I(t)) in der Kaltstartphase (KSP); und
einer Vergleichseinrichtung (5) zum Vergleichen des in der Kaltstartphase (KSP) erfassten Integralanteils (I(t)) mit mindestens einem in einer Speichereinrichtung gespeicherten vorbestimmten Schwellwert (S1(t); S2(t)) und zum Beurteilen (S5, S9, S11) der Funktionstüchtigkeit der Ventilhub-Verstelleinrichtung (10, 50, SV1, SV2) basierend auf dem Vergleichsergebnis.

9. Vorrichtung nach Anspruch 8, **dadurch gekennzeichnet, dass** die Ventilhub-Verstelleinrichtung (10, 50, SV1, SV2) eine Steuereinrichtung (10) zum Erzeugen eines Steuersignals (K) zum Anzeigen der Kaltstartphase (KSP) aufweist, wobei das Steuersignal (K) der Vergleichseinrichtung (5) zuführbar ist und die Vergleichseinrichtung (5) derart ausgestaltet ist, dass sie das Vergleichen nur bei Vorliegen des Steuersignals (K) durchführt.

10. Vorrichtung nach Anspruch 9, **dadurch gekennzeichnet**, **dadurch gekennzeichnet, dass** die Steuereinrichtung (10) mit der Vergleichseinrichtung (5) verbunden ist und ein Zeitspannensignal erzeugt, das anzeigt, dass seit dem Beginn der Kaltstartphase (KSP) eine vorbestimmte Zeitspanne (t0) verstrichen ist, wobei das Zeitspannensignal der Vergleichseinrichtung (5) zuführbar ist und die Vergleichseinrichtung (5) derart gestaltet ist, dass sie das Vergleichen nur bei Vorliegen des Zeitspannensignals durchführt.

11. Vorrichtung nach Anspruch 8, 9 oder 10, **dadurch gekennzeichnet**, **dadurch gekennzeichnet, dass** die Steuereinrichtung (10) zum Erzeugen eines Zeitsignals zum Anzeigen der Zeitspanne (t), die seit dem Beginn der Kaltstartphase (KSP) verstrichen ist, ausgestaltet ist, wobei das Zeitsignal der Vergleichseinrichtung (5) zugeführt ist, wobei eine Mehrzahl vorbestimmter Schwellwerte (S1(t); S2(t)) entsprechend verschiedener Zeiten in der Speichereinrichtung (6) gespeichert ist und wobei die Vergleichseinrichtung (6) derart ausgestaltet ist, dass sie den mit dem erfassten Integralanteil (I(t)) zu vergleichenden Schwellwert (S1(t); S2(t)) entsprechend der erfassten verstrichenen Zeitspanne (t) auswählt.

12. Vorrichtung nach einem der vorhergehenden Ansprüche 8 bis 11, wobei die Brennkraftmaschine (100) zwei Zylinderbänke (ZB1, ZB2) mit separater Ventilhubverstellung durch die Ventilhub-Verstelleinrichtung (10, 50, SV1, SV2) aufweist und wobei die Vergleichseinrichtung (5) zum Ausführen folgender Schritte ausgebildet ist:
erstes Vergleichen (S4) des in der Kaltstartphase (KSP) erfassten Integralanteils (I(t)) mit einem vorbestimmten ersten Schwellwert (S1(t));
erstes Beurteilen (S5, S9) der Funktionstüchtigkeit der Ventilhub-Verstelleinrichtung (10, 50, SV1, SV2) beider Zylinderbänke (ZB1, ZB2) basierend auf dem Ergebnis des ersten Vergleichens (S4);
zweites Vergleichen (S8) des in der Kaltstartphase (KSP) erfassten Integralanteils (I(t)) mit einem vorbestimmten zweiten Schwellwert (S2(t)), falls das erste Beurteilen anzeigt, dass die Funktionstüchtigkeit der Ventilhub-Verstelleinrichtung (10, 50, SV1, SV2) mindestens einer der beiden Zylinderbänke (ZB1, ZB2) fehlerhaft ist; und
zweites Beurteilen (S9, S11) der Funktionstüchtigkeit der Ventilhub-Verstelleinrichtung (10, 50, SV1, SV2) der beiden Zylinderbänke (ZB1, ZB2) basierend auf dem Ergebnis des zweiten Vergleichens (S8).

13. Vorrichtung nach einem der vorhergehenden Ansprüche 8 bis 12, **gekennzeichnet durch** eine Drosselklappen-Adaptionseinrichtung (30) zum Adaptieren der Drosselklappen-Sollwerte und eine Schwellwert-Adaptionseinrichtung zum entsprechenden Adaptieren des oder der Schwellwerte (S1(t); S2(t)).

14. Vorrichtung nach einem der vorhergehenden Ansprüche 8 bis 13, **dadurch gekennzeichnet, dass** eine Anzeigeeinrichtung (7) zum Anzeigen einer Fehlerhaftigkeit der Funktionstüchtigkeit der Ventilhub-Verstelleinrichtung (10, 50, SV1, SV2) vorgesehen ist.

## Claims

1. Method for monitoring the functional capability of a valve lift adjustment device (10, 50, SV1, SV2) for an internal combustion engine (100) during a cold start phase (KSP), wherein the internal combustion engine (100) has a throttle valve (2) which can be controlled electronically by means of a control device (3), and wherein the control device (3) uses an integral component (1(t)) for controlling the throttle valve (2), having the steps:
sensing (S2) the presence of a cold start phase (KSP);
sensing (S3) the integral component (1(t)) in the cold start phase (KSP);
comparison (S4, S8) of the integral component (1(t)) which is sensed in the cold start phase (KSP) with at least one predetermined threshold value (S1(t); S2(t)); and
evaluation (S5, S9, S11) of the functional capability of the valve lift adjustment device (10, 50, SV1, SV2) on the basis of the result of the comparison (S4, S8).

2. Method according to Claim 1, **characterized by** a step (S2a) of sensing what time period (t) has passed since the start of the cold start phase (KSP) and whether the sensed time period (t) is at least one predetermined time period (t0), wherein the sensing (S3) of the integral component (1(t)) is not carried out until the cold start phase (KSP) if the sensed time period (t) is at least the predetermined time period (t0) .

3. Method according to Claim 1 or 2, wherein the threshold value (S1(t); S2(t)) which is compared with the sensed integral component (1(t)) is selected, in accordance with the sensed time period (t), from a plurality of predetermined threshold values (S1(t); S2(t)).

4. Method according to one of the preceding claims, wherein the internal combustion engine (100) has two banks of cylinders (ZB1, ZB2) with separate valve lift adjustment by means of the valve lift adjustment device (10, 50, SV1, SV2), **characterized in that** the steps of comparing (S4, S8) and evaluating (S5, S9, S11) are carried out as follows:
first comparison (S4) of the integral component (1(t)) sensed in the cold start phase (KSP) with a predetermined first threshold value (S1(t));
first evaluation (S5, S9) of the functional capability of the valve lift adjustment device (10, 50, SV1, SV2) of the two banks of cylinders (ZB1, ZB2) on the basis of the result of the first comparison (S4);
second comparison (S8) of the integral component (1(t)) sensed in the cold start phase (KSP) with a predetermined second threshold value (S2(t)) if the first evaluation (S5, S9) indicates that the functional capability of the valve lift adjustment device (10, 50, SV1, SV2) of at least one of the two banks of cylinders (ZB1, ZB2) is faulty; and
second evaluation (S9, 811) of the functional capability of the valve lift adjustment device (10, 50, SV1, SV2) of the two banks of cylinders (ZB1, ZB2) on the basis of the second result of the second comparison (S8).

5. Method according to one of the preceding claims, **characterized in that** the threshold value or values (S1(t); S2(t)) is/are stored in a memory device (6).

6. Method according to one of the preceding claims, **characterized in that** the threshold value or values (S1(t); S2(t)) is/are adapted on the basis of a throttle valve setpoint value adaptation before the comparison (S4, S8).

7. Method according to one of the preceding claims, **characterized in that** the fact that the evaluated functional capability of the valve lift adjustment device (10, 50, SV1, SV2) has been found to be faulty is indicated by means of a display device (7).

8. Device for monitoring the functional capability of a valve lift adjustment device (10, 50, SV1, SV2) for an internal combustion engine (100) during a cold start phase (KSP), wherein the internal combustion engine (100) has a throttle valve (2) which can be controlled electronically by means of a control device (3), and wherein the control device (3) uses an integral component (1(t)) for controlling the throttle valve (2), having:
a sensing device (4) for sensing the integral component (1(t)) in the cold start phase (KSP); and
a comparison device (5) for comparison of the integral component (1(t)) which is sensed in the cold start phase (KSP) with at least one predetermined threshold value (S1(t); S2(t)) which has been stored in a memory device, and for evaluation (S5, S9, S11) of the functional capability of the valve lift adjustment device (10, 50, SV1, SV2) on the basis of the comparison result.

9. Device according to Claim 8, **characterized in that** the valve lift adjustment device (10, 50, SV1, SV2) has a control device (10) for generating a control signal (K) for indicating the cold start phase (KSP), wherein the control signal (K) can be fed to the comparison device (5), and the comparison device (5) is configured in such a way that it carries out the comparison only when the control signal (K) is present.

10. Device according to Claim 9, **characterized in that** the control device (10) is connected to the comparison device (5) and generates a time period signal which indicates that a predetermined time period (t0) has passed since the start of the cold start phase (KSP), wherein the time period signal can be fed to the comparison device (5) and the comparison device (5) is configured in such a way that it carries out the comparison only when the time period signal is present.

11. Device according to Claim 8, 9 or 10, **characterized in that** the control device (10) is configured to generate a time signal for indicating the time period (t) which has passed since the start of the cold start phase (KSP), wherein the time signal is fed to the comparison device (5), wherein a plurality of predetermined threshold values (S1(t); S2(t)) is stored in accordance with various times in the memory device (6), and wherein the comparison device (5) is configured in such a way that it selects the threshold value (S1(t); S2(t)) to be compared with the sensed integral component (1(t)), in accordance with the sensed time period (t) which has passed.

12. Device according to one of the preceding Claims 8 to 11, wherein the internal combustion engine (100) has two banks of cylinders (ZB1, ZB2) with separate valve lift adjustment by means of the valve lift adjustment device (10, 50, SV1, SV2), and wherein the comparison device (5) is designed to carry out the following steps:
first comparison (S4) of the integral component (1(t)) sensed in the cold start phase (KSP) with a predetermined first threshold value (S1(t));
first evaluation (S5, D9) of the functional capability of the valve lift adjustment device (10, 50, SV1, SV2) of the two banks of cylinders (ZB1, ZB2) on the basis of the result of the first comparison (S4);
second comparison (S8) of the integral component (1(t)) sensed in the cold start phase (KSP) with a predetermined second threshold value (S2(t)) if the first evaluation indicates that the functional capability of the valve lift adjustment device (10, 50, SV1, SV2) of at least one of the two banks of cylinders (ZB1, ZB2) is faulty; and
second evaluation (S9, S11) of the functional capability of the valve lift adjustment device (10, 50, SV1, SV2) of the two banks of cylinders (ZB1, ZB2) on the basis of the result of the second comparison (S8).

13. Device according to one of the preceding Claims 8 to 12, **characterized by** a throttle valve adaptation device (30) for adapting the throttle valve setpoint values and a threshold value adaptation device for correspondingly adapting the threshold value or values (S1(t); S2(t).

14. Device according to one of the preceding Claims 8 to 13, **characterized in that** a display device (7) is provided for indicating that the functional capability of the valve lift adjustment device (10, 50, SV1, SV2) is faulty.

## Revendications

1. Procédé pour surveiller l'aptitude au fonctionnement d'un dispositif de réglage de la course des soupapes (10, 50, SV1, SV2) d'un moteur à combustion interne (100) dans une phase de démarrage à froid (KSP), le moteur à combustion interne (100) présentant un clapet d'étranglement (2) régulable électroniquement au moyen d'un dispositif de régulation (3) et le dispositif de régulation (3) utilisant une part intégrale (I(t)) pour réguler le clapet d'étranglement (2), comprenant les étapes suivantes :
Détection (S2) de la présence d'une phase de démarrage à froid (KSP) ;
Détection (S3) de la part intégrale (I(t)) dans la phase de démarrage à froid (KSP) ;
Comparaison (S4, S8) de la part intégrale (I(t)) détectée dans la phase de démarrage à froid (KSP) avec au moins une valeur de seuil (S1(t) ; S2(t)) prédéterminée ; et
Évaluation (S5, S9, 811) de l'aptitude au fonctionnement du dispositif de réglage de la course des soupapes (10, 50, SV1, SV2) en se basant sur le résultat de la comparaison (S4, S8).

2. Procédé selon la revendication 1, **caractérisé par** une étape (S2a) de détection de l'intervalle de temps (t) écoulé depuis le début de la phase de démarrage à froid (KSP) et de vérification si l'intervalle de temps (t) détecté est au moins égal à un intervalle de temps prédéfini (t0), la détection (S3) de la part intégrale (I(t)) dans la phase de démarrage à froid (KSP) n'étant effectuée que lorsque l'intervalle de temps (t) détecté est au moins égal à l'intervalle de temps prédéfini (t0).

3. Procédé selon la revendication 1 ou 2, la valeur de seuil (S1(t); S2(t)) à comparer avec la part intégrale (I(t)) détectée étant sélectionnée à partir d'une pluralité de valeurs de seuil (S1(t); S2(t)) prédéterminées en fonction de l'intervalle de temps (t) détecté.

4. Procédé selon l'une des revendications précédentes, le moteur à combustion interne (100) présentant deux groupes de cylindres (ZB1, ZB2) avec un réglage de course de soupape réalisé séparément par le dispositif de réglage de la course des soupapes (10, 50, SV1, SV2), **caractérisé en ce que** les étapes de comparaison (S4, S8) et d'évaluation (S5, S9, S11) se déroulent comme suit :
Première comparaison (S4) de la part intégrale (I(t)) détectée dans la phase de démarrage à froid (KSP) avec une première valeur de seuil (S1(t)) prédéterminée ;
Première évaluation (S5, S9) de l'aptitude au fonctionnement du dispositif de réglage de la course des soupapes (10, 50, SV1, SV2) des deux groupes de cylindres (ZB1, ZB2) en se basant sur le résultat de la première comparaison (S4) ;
Deuxième comparaison (S8) de la part intégrale (I(t)) détectée dans la phase de démarrage à froid (KSP) avec une deuxième valeur de seuil (S2(t)) prédéterminée si la première évaluation (S5, S9) révèle que l'aptitude au fonctionnement du dispositif de réglage de la course des soupapes (10, 50, SV1, SV2) d'au moins l'un des deux groupes de cylindres (ZB1, ZB2) est défaillante ; et
Deuxième évaluation (S9, S11) de l'aptitude au fonctionnement du dispositif de réglage de la course des soupapes (10, 50, SV1, SV2) des deux groupes de cylindres (ZB1, ZB2) en se basant sur le deuxième résultat de la deuxième comparaison (S8).

5. Procédé selon l'une des revendications précédentes, **caractérisé en ce que** la ou les valeurs de seuil (S1(t) ; S2(t)) sont enregistrées dans un dispositif de mémorisation (6).

6. Procédé selon l'une des revendications précédentes, **caractérisé en ce que** la ou les valeurs de seuil (S1(t); S2(t)) sont adaptées avant la comparaison (S4, S8) en se basant sur une adaptation de la valeur de consigne du clapet d'étranglement.

7. Procédé selon l'une des revendications précédentes, **caractérisé en ce qu'**une aptitude au fonctionnement évaluée défaillante du dispositif de réglage de la course des soupapes (10, 50, SV1, SV2) est signalée au moyen d'un dispositif indicateur (7).

8. Dispositif pour surveiller l'aptitude au fonctionnement d'un dispositif de réglage de la course des soupapes (10, 50, SV1, SV2) d'un moteur à combustion interne (100) dans une phase de démarrage à froid (KSP), le moteur à combustion interne (100) présentant un clapet d'étranglement (2) régulable électroniquement au moyen d'un dispositif de régulation (3) et le dispositif de régulation (3) utilisant une part intégrale (I(t)) pour réguler le clapet d'étranglement (2), comprenant :
Un dispositif de détection (4) de la part intégrale (I(t)) dans la phase de démarrage à froid (KSP) ; et
Un dispositif de comparaison (5) destiné à comparer la part intégrale (I(t)) détectée dans la phase de démarrage à froid (KSP) avec au moins une valeur de seuil (S1(t) ; S2(t)) prédéterminée et enregistrée dans un dispositif de mémorisation et d'évaluation (S5, S9, 811) de l'aptitude au fonctionnement du dispositif de réglage de la course des soupapes (10, 50, SV1, SV2) en se basant sur le résultat de la comparaison.

9. Dispositif selon la revendication 8, **caractérisé en ce que** le dispositif de réglage de la course des soupapes (10, 50, SV1, SV2) présente un dispositif de commande (10) destiné à produire un signal de commande (K) pour indiquer la phase de démarrage à froid (KSP), le signal de commande (K) pouvant être acheminé au dispositif de comparaison (5) et le dispositif de comparaison (5) étant configuré de telle sorte qu'il n'effectue la comparaison qu'en présence du signal de commande (K).

10. Dispositif selon la revendication 9, **caractérisé en ce que** le dispositif de commande (10) est relié avec le dispositif de comparaison (5) et génère un signal d'intervalle de temps qui indique qu'un intervalle de temps (Z0) donné s'est écoulé depuis le début de la phase de démarrage à froid (KSP), le signal d'intervalle de temps pouvant être acheminé au dispositif de comparaison (5) et le dispositif de comparaison (5) étant configuré de telle sorte qu'il n'effectue la comparaison qu'en présence du signal d'intervalle de temps.

11. Dispositif selon la revendication 8, 9 ou 10, **caractérisé en ce que** le dispositif de commande (10) est configuré pour générer un signal de temps destiné à indiquer l'intervalle de temps (t) qui s'est écoulé depuis le début de la phase de démarrage à froid (KSP), le signal de temps étant acheminé au dispositif de comparaison (5), une pluralité de valeurs de seuil (S1(t) ; S2(t)) prédéterminées correspondant à des temps différents étant enregistrées dans le dispositif de mémorisation (6) et le dispositif de comparaison (5) étant configuré de telle sorte qu'il sélectionne la valeur de seuil (S1(t) ; S2(t)) à comparer avec la part intégrale (I(t)) détectée en fonction de l'intervalle de temps (t) écoulé détecté.

12. Dispositif selon l'une des revendications 8 à 11, le moteur à combustion interne (100) présentant deux groupes de cylindres (ZB1, ZB2) avec un réglage de course de soupape réalisé séparément par le dispositif de réglage de la course des soupapes (10, 50, SV1, SV2) et le dispositif de comparaison (5) étant configuré pour exécuter les étapes suivantes :
Première comparaison (S4) de la part intégrale (I(t)) détectée dans la phase de démarrage à froid (KSP) avec une première valeur de seuil (S1(t)) prédéterminée ;
Première évaluation (S5, S9) de l'aptitude au fonctionnement du dispositif de réglage de la course des soupapes (10, 50, SV1, SV2) des deux groupes de cylindres (ZB1, ZB2) en se basant sur le résultat de la première comparaison (S4) ;
Deuxième comparaison (S8) de la part intégrale (I(t)) détectée dans la phase de démarrage à froid (KSP) avec une deuxième valeur de seuil (S2(t)) prédéterminée si la première évaluation révèle que l'aptitude au fonctionnement du dispositif de réglage de la course des soupapes (10, 50, SV1, SV2) d'au moins l'un des deux groupes de cylindres (ZB1, ZB2) est défaillante ; et
Deuxième évaluation (S9, S11) de l'aptitude au fonctionnement du dispositif de réglage de la course des soupapes (10, 50, SV1, SV2) des deux groupes de cylindres (ZB1, ZB2) en se basant sur le résultat de la deuxième comparaison (S8).

13. Dispositif selon l'une des revendications 8 à 12, **caractérisé par** un dispositif d'adaptation de clapet d'étranglement (30) destiné à adapter les valeurs de consigne du clapet d'étranglement et un dispositif d'adaptation de valeur de seuil destiné à l'adaptation en conséquence de la ou des valeurs de seuil (S1(t) ; S2(t)).

14. Dispositif selon l'une des revendications 8 à 13, **caractérisé en ce qu'**il est prévu un dispositif indicateur (7) pour indiquer l'aptitude au fonctionnement défaillante du dispositif de réglage de la course des soupapes (10, 50, SV1, SV2).
